## Europäisches Patentamt

## European Patent Office

## Office européen des brevets

(19)

(11) Veröffentlichungsnummer: **0 164 572**
**B1**

(12)

# EUROPÄISCHE PATENTSCHRIFT

(45) Veröffentlichungstag der Patentschrift:
**18.01.89**

(51) Int. Cl.⁴: **E 05 B 49/00**

(21) Anmeldenummer: **85105618.4**

(22) Anmeldetag: **08.05.85**

(54) Schliesszylinder für kombiniertes mechanisches und elektrisches Betätigen.

(30) Priorität: **22.05.84 FR 8407938**

(43) Veröffentlichungstag der Anmeldung:
**18.12.85 Patentblatt 85/51**

(45) Bekanntmachung des Hinweises auf die Patenterteilung:
**18.01.89 Patentblatt 89/3**

(84) Benannte Vertragsstaaten:
**DE FR GB IT SE**

(56) Entgegenhaltungen:
**DE-A- 3 245 681**
**DE-A- 3 330 740**
**FR-A- 2 450 930**
**US-A- 3 408 838**
**US-A- 3 873 891**

(73) Patentinhaber: **NEIMAN, 39 Avenue Marceau,
F-92400 Courbevoie (FR)**

(72) Erfinder: **Lipschutz, Paul, 12, rue Maurice Berteaux,
F-78290 Croissy (FR)**

(74) Vertreter: **Patentanwaltsbüro Cohausz & Florack,
Schumannstrasse 97, D-4000 Düsseldorf 1 (DE)**

ACTORUM AG

## Beschreibung

Die Erfindung bezieht sich auf einen Schliesszylinder zum kombinierten mechanischen und elektrischen Betätigen mit einem frei beweglichen Geber eines kodierten Befehlssignals und einem Empfänger dieses Signals, wobei der Geber vom Empfänger unabhängig ist und der Geber sich in bezug auf den Empfänger in einer Arbeitsstellung befindet, bei der die Winkelstellung (Lenksperre) des Zylinderkerns eine andere ist als die Winkelstellung zur Einführung des Gebers.

Vorrichtungen der oben erwähnten Art sind aus der DE-A 33 30 740 (Veröffentlichungsdatum 14.3.85) und DE-A 32 45 681 bekannt, die zum Verriegeln und Entriegeln der Türen eines Kraftfahrzeugs Verwendung finden. Der Einsatz dieser Vorrichtungen zur Betätigung des Lenkschlosses wäre zur Erhöhung der Sicherheit gegen Diebstahl sehr erwünscht, doch bestimmte Hersteller wollen, dass sich der Schlüssel zum Verriegeln der Türen von dem für das Lenkschloss unterscheidet. Darüber hinaus erfordert die direkte Benutzung des Gebers zum Betätigen des Lenkschlosses zahlreiche Sicherheiten sowie die Unterweisung der Fahrer für die Handhabung einer neuen Vorrichtung.

Aufgabe der Erfindung ist es, einen Schliesszylinder zu schaffen, der in sich den Geber für den kodierten Befehl und einen herkömmlichen mechanischen Verschluss vereinigt.

Zu diesem Zweck wird vorgeschlagen, dass der Geber als Gehäuse ausgebildet ist und ein aktives elektrisches Bauelement enthält, und dass das Gehäuse in den Kanal des Schliesszylinderkerns einsteckbar ist und das Gehäuse aussen mindestens einen mechanischen Einschnitt aufweist, der mit dem Schliesszylinderkern zusammenwirkt.

Es kann hier nicht mehr von einem Schlüsselschaft gesprochen werden und möglicherweise überhaupt nicht mehr von einem Schlüssel, sondern von einem Sender mit Gehäuse und am Gehäuse aussen befindlichen Kerben. Somit ist ein kompaktes Senderhäuse gleichzeitig aussen ähnlich einem Schlüssel mit Kerben ausgebildet.

Auch wird in bezug auf die Fernbetätigung eine zusätzliche Sicherheit geboten, indem der mechanische Schliesszylinder die Verwendung des Gebers und des ihm zugeordneten Empfängers erst nach mechanischem Betätigen dieses Schliesszylinders zulässt.

Vorteilhafte Ausgestaltungen der Erfindung sind in den Unteransprüchen aufgeführt.

Andere Aspekte des Schliesszylinders werden in der Anmeldung EP-A 266 803 beansprucht.

Die Erfindung wird gut verständlich beim Lesen der folgenden Beschreibung in bezug auf die beigeheftete Zeichnung, in der:

Figur 1 eine Querschnittsansicht eines Lenkschlosses nach einem Ausführungsbeispiel der Erfindung ist;

Figur 2 ist eine Ansicht des Schliesszylinders in Fig. 1 im Längsschnitt, und

Figur 3 ist eine Prinzipskizze der Winkelstellungen des Kerns des in Fig. 1 und 2 dargestellten Schliesszylinders.

Der Schliesszylinder umfasst einen Geber 1, der mit Infrarotstrahlung, Ultraschall oder Radiowellen etc. arbeiten kann. Ein Zylinderkern 2 des mechanischen Schliesszylinders hat einen Sitz 2' für den Geber 1, der eine Rippe 1' mit einem kodierten Einschnitt 9 analog zu dem eines Schlüssels umfasst. Eine Nocke 1'' dient als Bezug für den Einschnitt 9. Der Schliesszylinder umfasst auch ein Zylindergehäuse 3, und Stiftpaare 4–5 mit Stiftfedern 6 werden im Schliesszylinder 2–3 durch eine Klappe 7 eingeschlossen und wirken mit dem Einschnitt 9 zusammen, um die Drehung des Zylinderkerns 2 im Zylindergehäuse 3 in üblicher Weise zu ermöglichen.

Der Geber 1 trägt einen Betätigungsknopf 8 und eine Geberdiode 12 (bei Lichtstrahlung), die den kodierten Befehl an eine fest mit dem Zylindergehäuse 3 verbundene Empfängerdiode 13 überträgt. Der Zylinderkern 2 ist fest mit einer Platte 14 verbunden, die mit einem Fenster 12' ausgerüstet ist und bewegliche Kontakte trägt, die mit den festen Kontakten 11, 11' unter der Wirkung einer Feder 15 zusammenwirken. Ein Fenster 12'' ist in einem Gehäuse 10 vorgesehen, das mit dem Zylindergehäuse 3 gegenüber der Empfängerdiode 13 fest verbunden ist.

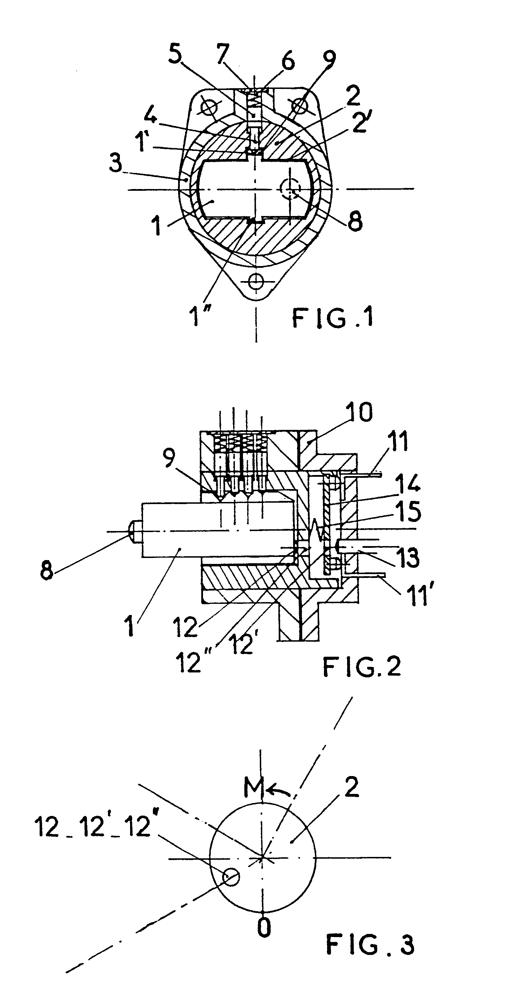

In der Stellung 0 (Fig. 3) kann der Geber 1 in den Sitz 1' eingeführt werden, wobei der Einschnitt 9 mit den Stiften 4–5 zur Freigabe des Zylinderkerns 2 zusammenwirkt. In dieser Stellung befindet sich die Geberdiode 12 nicht gegenüber dem Fenster 12'' des Zylindergehäuses 3 und der Empfängerdiode 13. Das Betätigen des Knopfes 8 ermöglicht somit nicht den Durchgang des Signals der Geberdiode 12 an die Empfängerdiode 13.

Nach Drehung des Zylinderkerns 2 bis zur Stellung «Lenksperre» befindet sich die Geberdiode 12 gegenüber der Empfängerdiode 13 durch die Fenster 12' und 12''. Das Betätigen des Knopfes 8 ermöglicht die Übertragung des kodierten Befehls von der Geberdiode 12 zur Empfängerdiode 13. Der mit der Diode 13 verbundene Empfänger (nicht dargestellt) betätigt jetzt die elektromechanische Entriegelung des Schliesszylinders. Wenn dann der Zylinderkern 2 weitergedreht wird, erhält man die notwendigen elektrischen Kontakte, wie zum Beispiel «Acc» (Accessoires = Zubehör), «M» (Marche normale = Fahrtstellung), «Demar.» (Démarreur = Anlassstellung). Die Geberdiode 12 befindet sich bei diesen Bewegungen nicht mehr gegenüber der Empfängerdiode 13, und jede Betätigung des Knopfes 8 bleibt ohne Wirkung.

Dreht man den Zylinderkern in entgegengesetztem Sinne bis zur Stellung «Lenksperre» zurück, wird durch Drücken des Knopfes 8 die Verriegelung des Schliesszylinders bewirkt. Dann wird bei Rückkehr in die Stellung «0» das Abziehen des Gebers 1 möglich.

## Patentansprüche

1. Schliesszylinder zum kombinierten mechanischen und elektrischen Betätigen mit einem frei beweglichen Geber (1) eines kodierten Befehlssignals und einem Empfänger dieses Signals, wobei der Geber vom Empfänger unabhängig ist und der Geber (1) sich in bezug auf den Empfänger (13) in einer Arbeitsstellung befindet, bei der die Winkelstellung («Lenksperre») des Zylinderkerns (2) eine andere ist als die Winkelstellung («0») zur Einführung des Gebers (1), dadurch gekennzeichnet, dass der Geber als Gehäuse ausgebildet ist und ein aktives elektrisches Bauelement (12) enthält, und dass das Gehäuse in den Kanal des Schliesszylinderkerns einsteckbar ist und das Gehäuse aussen mindestens einen mechanischen Einschnitt (9) aufweist, der mit dem Schliesszylinderkern (2) zusammenwirkt.

2. Schliesszylinder gemäss Anspruch 1, dadurch gekennzeichnet, dass der Geber (1) mit Infrarotstrahlung über eine Geberdiode (12) arbeitet und das Zylindergehäuse (3) ein Fenster (12'') für einen auf die Empfängerdiode (13) des Empfängers ausgerichteten Durchgang umfasst.

3. Schliesszylinder gemäss einem der Ansprüche 1 oder 2, dadurch gekennzeichnet, dass der Empfänger (13) die Verriegelung und Entriegelung des Schliesszylinders steuert.

## Claims

1. Lock cylinder for combined mechanical and electrical actuation, with a freely movable transmitter (1) to deliver a coded command signal and a receiver of this signal, the transmitter being independent of the receiver and the transmitter (1) being in relation to the receiver (13) in a working position in which the angular position («steering lock») of the cylinder core (2) is a position other than the angular position («0») for insertion of the transmitter (1), characterised in that the transmitter is constructed as a housing and contains an active electrical component (12) and in that the housing can be fitted into the channel in the cylinder lock core and in that the housing has externally at least one mechanical indentation (9) which co-operates with the lock cylinder core (2).

2. Lock cylinder according to Claim 1, characterised in that the transmitter (1) operates by infra-red radiation via a transmitter diode (12), the cylinder housing (3) comprising a window (12'') for passage of a transmission orientated at the receiver diode (13) of the receiver.

3. Lock cylinder according to one of Claims 1 or 2, characterised in that the receiver (13) controls the locking and unlocking of the lock cylinder.

## Revendications

1. Verrou à barillet pour l'actionnement combiné mécanique et électrique avec un émetteur (1) mobile librement d'un signal de commande codé et un récepteur de ce signal, l'émetteur étant indépendant du récepteur et l'émetteur (1) se trouvant dans une position de travail, par rapport au récepteur (13), dans laquelle la position angulaire («blocage de direction») du rotor (2) est différente de la position angulaire (0) d'introduction de l'émetteur (1), caractérisé par le fait que l'émetteur est constitué sous forme d'un boîtier et contient un élément de construction électrique actif (12), et que le boîtier peut être enfoncé dans le canal du barillet de serrure et le boîtier présente extérieurement au moins une entaille mécanique (9) qui coopère avec le rotor (2) de verrou.

2. Verrou selon la revendication 1, caractérisé par le fait que l'émetteur (1) travaille par rayonnement infrarouge au moyen d'une diode émettrice (12) et que le stator (3) comprend une fenêtre (12'') pour un passage dirigé sur la diode réceptrice (13) du récepteur.

3. Verrou selon l'une des revendications 1 et 2, caractérisé par le fait que le récepteur (13) commande le verrouillage et le déverrouillage du verrou.

FIG.1

FIG.2

FIG.3